# EUROPEAN PATENT APPLICATION

(11) **EP 4 667 419 A1**
(43) Date of publication of application: **24.12.2025**
(21) Application number: 25183358.8
(22) Date of filing: 17.06.2025
(51) Int. Cl.: C02F 1/00, C02F 1/28, C02F 1/52, C02F 1/56, C02F 101/36, C02F 103/06

(54) **PLANT AND METHOD FOR REMOVING PFAS FROM HIGHLY CONTAMINATED SOLUTIONS**

(30) Priority: 18.06.2024 IT 202400013873
(71) Applicant: Depuracque Servizi S.R.L., 30030 Salzano (VE) (IT)
(72) Inventor: CARRARO, Davide, 30030 Salzano (VE) (IT); NALON, Alberto, 30030 Salzano (VE) (IT); LEVORATO, Nicola, 30030 Salzano (VE) (IT)
(74) Representative: Belloni, Giancarlo

(57) **Abstract**

The invention concerns a plant for removing PFAS from a highly contaminated solution comprising landfill leachates or industrial liquid waste. The plant comprises a reactor (14), an intermediate reservoir (18) and a series of filters. The reactor is configured for submitting the highly contaminated solution to a chemical-physical pre-treatment of the batch type and comprises means for dosing additives. The series of filters, placed downstream of the intermediate reservoir, comprises: a glass filter (22), a granular activated carbon filter (24), and a selective resin filter (26). The invention further concerns a method for removing PFAS from a highly contaminated solution.

## Description

### TECHNICAL FIELD

The present invention refers to a plant and a method for removing per- and polyfluoroalkyl substances (commonly called PFAS) present in highly contaminated liquid solutions, in particular, landfill leachates and other industrial liquid waste.

### STATE OF THE ART

Per- and poly-fluoroalkyl substances, commonly called PFAS, are a class of compounds that began to be widely used in the mid-20th century onwards, e.g. to make heat-, oil-, stain-, grease- and water-resistant fluoropolymer coatings and products. In particular, PFAS are used in a variety of products, including for example: waterproof clothing, furniture, adhesives, food packaging, non-stick and heat-resistant cooking surfaces, fire-fighting foams, stain-resistant coatings and electrical cable insulation. PFAS are also used as surfactants, flame retardants, lubricants, and as additives in dyes.

Such compounds are constituted by a carbon chain of variable length on which at least one (in the polyfluoroalkyl acids) or all (in the perfluoroalkyl acids) of the hydrogen atoms bound to the carbon chain are replaced by fluorine atoms. The chemical structure of PFAS may also include charged functional groups. Based on the functional group, PFAS are divided into perfluorocarboxylic acids (PFCASs) and perfluoroalkylsulfonic acids (PFSAs). Another subdivision dictated by the Organization for Economic Cooperation and Development (OECD) designates as "long-chain compounds" PFCAS with eight or more carbon atoms and PFSAS with six or more carbon atoms, while PFCAS with seven or fewer carbon atoms and PFSAS with five or fewer carbon atoms are classified as "short-chain compounds".

From the point of view of the chemical properties of the PFAS, the C-F bond is the strongest single covalent bond existing in nature (536 kJ/mol), and this gives these compounds considerable thermal and chemical stability. Moreover, the charged functional group also gives additional stability to these compounds. PFAS also exhibit both hydrophobic and hydrophilic properties, which are primarily attributable to the low polarizability of the fluorine atoms. As the size of the carbon chain increases, PFAS become more lipophilic, while the decrease in the carbon atoms of the chain gives greater solubility in water. Other properties, including a strong resistance to chemical, as well as biological and thermal degradation, combined with redox stability, give these compounds unique characteristics, making them suitable for various industrial applications, including those described above by way of example.

The ultimate fate of everyday objects and products has been, and to a large extent still is, disposal in landfills. The widespread use of the PFAS means that they, since they are not biodegradable, are found in leachates generated by landfills where waste is disposed of, among which there are many products containing PFAS. In addition, as is well understood, PFAS are also present in the waste generated by the numerous industrial processes that use them.

Unfortunately, PFAS are of growing concern due to their impact on the environment and human health. Indeed, the PFAS problem is currently present at a global level, as high levels of these compounds have been reported in drinking water, especially in the United States, China, Australia and India, as well as within the European Union and Italy itself. Furthermore, several studies conducted both in Italy and abroad have shown that these substances are also present in groundwater.

At the Italian level, this problem is present above all in the Veneto Region, where the so-called "red zone" (Resolution of the Regional Council No. 2133 of 23/12/2016 and subsequent amendments) has been defined in the area of Trissino (VI) and neighbouring municipalities. In 2017, the Veneto Region therefore set limit values for PFAS concentrations in both drinking water and wastewater. These limits made it necessary to implement systems for removing such compounds. New regulations are therefore expected to be enacted in the near future, also at the national level, regarding restrictions on the presence of PFAS at landfill discharges and industrial waste treatment plants. There is therefore a clear need to remove these compounds from all aqueous solutions in which they are present, whether they are industrial liquid waste, landfill leachates or groundwater, in order to avoid secondary contamination of the waters intended for human consumption.

From the point of view of human health, in fact, PFAS are of concern as they can be absorbed by ingestion and, not being metabolised, tend to accumulate within the body, in particular in the liver. Epidemiological studies have shown that the presence of PFOA and PFOS in humans can be correlated with a high incidence of thyroid disease, high cholesterol, ulcerative colitis, kidney or testicular cancer, pregnancy-induced hypertension. As a consequence of this persistence, toxicity and carcinogenicity, long-chain PFAS were banned from production in the early 2000s. However, their replacement with other shorter-chain perfluorinated compounds, which are also non-biodegradable, has not led to a noticeable improvement in the environmental problem of PFAS pollution. Moreover, short-chain PFAS have also been shown to have adverse effects on human health.

With regard to the remediation of PFAS-contaminated waters, the conventional treatments are ineffective for their degradation, due to the high strength of the C-F bond in the chain, their low concentration in water and their hydrophilicity. In particular, clari-flocculation, stripping, biological treatments, disinfection by means of Chlorine (Cl₂), UV radiation, ozone or OH· radicals, traditionally also used in drinking water plants, are ineffective for the destruction of the PFAS.

Currently, the most efficient techniques for removing perfluoroalkyl compounds from an aqueous solution exploit solid phase adsorption processes, vacuum evaporation processes, and membrane separation processes such as nanofiltration and reverse osmosis. However, the latter techniques suffer from a high sensitivity with respect to the concentration of PFAS, which usually varies over a very wide range, to the characteristics of the aqueous solution (competitive anions, organic material), the disposal of the so-called concentrate with a high concentration of PFAS and other contaminants generated by these processes, as well as considerably higher plant implementation costs.

Based on these considerations, adsorption appears to be an industrially effective technology for removing PFAS, both as a single application process and as part of a *"treatment train"* in a wastewater treatment plant. At present, adsorption studies are mainly focused on long-chain PFAS (PFOA and PFOS) and it has been demonstrated that many other micropollutants, both organic (COD *- Chemical Oxygen Demand*) and inorganic, normally present in the solutions to be treated, can negatively affect the efficiency of the removal processes, due to competition with perfluoroalkyl compounds on the active sites.

With regard to the mechanism of adsorption of the PFAS by the activated carbons, the hydrophobic interactions between the active sites of carbon and the carbon chains of the PFAS are considered the predominant forces governing the process. It was also found that PFSAS are more easily removed than PFCAS and that the efficiency of PFAS removal also depends on the length of the carbon chain. More particularly, long-chain compounds are retained more than short-chain compounds. Ultimately, the only hydrophobic interactions that are established between activated carbons and PFAS do not allow the effective adsorption of these latter particular compounds (especially PFBA, perfluorobutanoic acid), resulting in poor performance in terms of durability of the filtering masses which translate into higher plant operating costs.

The ordinary skills of a person skilled in the art make it clear that the cost of an activated carbon filtration treatment, which includes the disposal of the filtering masses once saturated, is high due to the high amount of carbon required for the treatment of large flow rates and due to the cost of regeneration/ disposal of the spent carbon at third parties, due to abrupt saturation, especially with regard to the adsorption of short-chain compounds.

Considering that PFAS exist in an anionic form at ambient pH, their removal can also be easily achieved by means of selective anion exchange resins; in this regard, see for example patent document AU 2020213340 B2. Such resins are constituted by highly porous polymeric materials, suitably functionalized with charged functional groups. The anion exchange is a reversible exchange process between negative ions from the surface of a polymeric resin to the surrounding aqueous solution. The influencing solution being the same, the performance of the anion exchange resins is considerably better than those obtained by using granular activated carbon (GAC). In fact, in addition to the hydrophobic interactions that are established between the hydrophobic polymer backbone of the resin and the carbon chains of the PFAS, there are also electrostatic interactions between the positively charged functional groups of the resin and the negatively charged functional groups of the PFAS. Since the electrostatic interactions originate from the charged functional groups and the hydrophobic interactions are linked to the carbon chain, the electrostatic interactions predominate for short-chain PFAS, while hydrophobic interactions predominate for long-chain PFAS. For this reason, the resins have proven to be more effective than GAC for removing short-chain compounds. In contrast, the greater selectivity of the resins towards PFAS makes these materials much more sensitive to contamination of the solution in which the PFAS are present. For example, the presence of other organic micropollutants, inorganic anions that can compete with PFAS for active sites, and pH variations adversely affect ion exchange efficiency.

This is why, traditionally, this type of process is mainly used in surface waters characterised by low concentrations of salts and/or other pollutants of organic matrix or synthetic waters, and especially for removing long-chain compounds (PFOA and PFOS), which are often present at high concentrations that are not very representative of the actual environmental conditions. Data collected so far in full-scale in drinking water and wastewater treatment plants have also demonstrated that the removal of the short-chain compounds is still a challenge due to the rapid saturation of filtering masses. The problem of removing PFAS from heavily contaminated water, such as industrial waste or landfill leachates, still remains largely unresolved, although these are one of the major sources of this type of pollution.

Patent document AU 2023203478 A1 describes a system for removing PFAS based on a stirring and flocculation system and a subsequent filtration system for removing particulate. The stirring and flocculation system is configured to treat PFAS-contaminated water by dosing anhydrite (CaSO₄), to precipitate the contaminants such as calcium salts. A fixed-bed cross-flow filtration system and a particulate capture filter are provided downstream of this treatment. This solution also provides for a softening system to remove calcium present downstream of the flocculation/ filtration process or, alternatively, a filtration system on anion exchange resins. This process is intended for waters that are not particularly contaminated (except by PFAS), so it is unsuitable for use on landfill leachates. In addition, the use of a coagulant such as anhydrite, which is not able to vary the pH of the solution, does not allow, for example, the precipitation of the most common contaminants present in wastewater or landfill leachates.

Other solutions proposed for the treatment of landfill leachates involve in-line dosing of flocculant agents. This, however, results in the formation of sludges that must be removed by means of an appropriate process to remove even the finest fraction of the suspended material. This fraction, in fact, is able to clog any other filtering masses placed downstream and thus interfere with the removal of the PFAS. In addition, the removal of metals (typically iron and aluminium) whose concentration following the dosing of flocculant agents may exceed any limits imposed on the discharge must generally also be ensured. The skilled person can easily understand that mere filtration on quartz sand or activated carbon has little effects on the removal of heavy metals present in aqueous solutions.

In light of all the above, the need is therefore felt for a new plant and a new method for removing PFAS from highly contaminated liquid solutions.

### OBJECTS AND SUMMARY OF THE INVENTION

Aim of the present invention is therefore to overcome at least partially the drawbacks highlighted above in relation to the prior art.

In particular, a task of the present invention is to make available a plant and a method for removing PFAS from highly contaminated waters, which are both effective and efficient.

Furthermore, a task of the present invention is to make available a plant and a method for removing PFAS from highly contaminated waters, which allow to minimize the operating costs, in particular those deriving from the replacement of the filtering masses.

Finally, a task of the present invention is to make available a plant and a method for removing PFAS from highly contaminated waters, which allow to remove at the same time the other pollutants present in the same waters, in particular the heavy metals.

These and other objects and tasks of the present invention are achieved by a plant and a method in accordance with the appended claims. Further characteristics are identified in the dependent claims. All appended claims form an integral part of the present disclosure.

Iin accordance with a first aspect, the invention concerns a plant for removing PFAS from a highly contaminated solution comprising landfill leachates or industrial liquid waste. The plant of the invention comprises:
- a reactor configured for submitting the highly contaminated solution to a chemical-physical pre-treatment of the batch type, wherein the reactor comprises means for dosing additives configured for dosing coagulant reagents and, subsequently, flocculant reagents; and wherein the reactor is configured so as to separate the sludges which originate inside it from the solution to be treated;
- an intermediate reservoir for accumulating the solution downstream of the reactor, configured for receiving the entire quantity of solution at the end of the chemical-physical treatment operated by the reactor and configured for releasing a controlled flow rate of solution downstream; and
- a series of filters, placed downstream of the intermediate reservoir, configured for submitting the solution to continuous filtration.

In the plant of the invention, the series of filters comprises:
- a glass filter containing glass microbeads with different particle sizes arranged to form homogeneous layers;
- a granular activated carbon filter, placed downstream of the glass filter; and
- a selective resin filter, placed downstream of the glass filter, comprising resins containing electropositive functional groups.

The structure of the plant of the invention allows an extremely effective removal of all PFAS, even short-chain ones, from a highly contaminated solution such as a landfill leachates or other industrial liquid waste.

Preferably the means for dosing additives are configured for dosing powdered activated carbon after dosing the coagulant reagents and before dosing the flocculant reagents.

The addition of powdered activated carbon in the reactor allows to increase the amount of contaminants that are removed in the clari-flocculation process, thus increasing the operating life of the filters placed downstream of the reactor.

Preferably the reactor has a truncated conical shape and/or comprises a sludge separator of the type: lamella clarifier, flocculator or dissolved air floatation apparatus.

The removal of the sludges allows a solution to be obtained at the exit of the reactor that is significantly less contaminated than the initial one.

Preferably, microbeads with dimensions comprised between 0.20 and 0.30 mm are arranged in the upper part of the glass filter; microbeads with dimensions comprised between 0.75 and 1.00 mm are arranged in the central part of the glass filter; and glass microbeads with dimensions comprised between 1.00 and 1.30 mm are arranged in the lower part of the glass filter.

The Applicant has noted that the combination of the particle sizes indicated above is particularly effective for the filtration process. The use of glass microbeads, instead of other filter elements such as sand, in fact allows for very tight control over the particle size of the filter material. In addition, the provision of microbeads with different particle sizes arranged in homogeneous layers described above, counterintuitive for a person skilled in the art, allows the performance of the filter to be optimised in terms of removal of suspended material both during filtration and regeneration. This expedient makes it possible to lengthen the operation of the filter by up to 10 years.

Preferably, the granular activated carbon used in the GAC filter has a specific surface area comprised between 800 and 1,550 m²/g and an iodine value comprised between 800 and 1,300.

These characteristics of the granular activated carbon were selected by the Applicant in the course of their studies because they proved to be particularly efficient for the filtration process.

Preferably the selective resins employed in the filter are constituted by resins constituted by polystyrene-divinylbenzene or by polyacrylic resins, and wherein the electropositive functional groups are amine/amide groups.

These selective resins were selected by the Applicant in the course of their studies because they proved to be particularly efficient for the filtration process.

Preferably, the plant of the invention comprises two granular activated carbon filters, wherein the connection of the two granular activated carbon filters is reconfigurable and allows different modes of operation: in series, in parallel or alternated.

Preferably, the plant of the invention comprises two selective resin filters, wherein the connection of the two granular activated carbon filters is reconfigurable and allows different modes of operation: in series, in parallel or alternated.

The possibility of reconfiguring the connections between two filters of the same type makes it possible, if necessary, to lengthen the filtration path travelled by the solution, to decrease the solution flow rate in each filter or to guarantee the functionality of the plant even when a filter is being serviced.

Preferably, the granular activated carbon filter is placed upstream of the selective resin filter.

This configuration preserves the selective resin filter and ensures, on the whole, a longer operating life.

In accordance with a second aspect, the invention concerns a method for removing PFAS from a high contamination solution comprising landfill leachates or industrial liquid waste, wherein the solution comprises:
- concentrations of PFAS greater than 10,000 ng/l; and/or
- an organic charge, expressed as chemical oxygen demand (COD) greater than 1,000 mgO₂/l; and/or
- a concentration of suspended material greater than 200 mg/l.

The method of the invention comprises the steps of:
- providing a reactor configured to allow a chemical-physical pre-treatment of the batch type;
- feeding the solution to be treated to the reactor;
- dosing, in the solution to be treated, coagulant reagents and, subsequently, flocculant reagents;
- promoting a clari-flocculation process in the solution to be treated;
- separating the sludges generated by the clari-flocculation from the solution to be treated;
- accumulating the solution in an intermediate reservoir;
- releasing in a continuous manner a controlled flow rate of solution from the intermediate reservoir;
- filtering in a continuous manner the solution to be treated by means of a glass filter containing glass microbeads with different particle sizes arranged to form homogeneous layers.

Furthermore, after the step of filtering the solution by means of the glass filter, the method comprises the further steps of:
- filtering in a continuous manner the solution to be treated by means of a granular activated carbon filter; and
- filtering in a continuous manner the solution to be treated by means of a selective resin filter.

The method of the invention allows an extremely effective removal of all PFAS, even short-chain ones, from a highly contaminated solution such as a landfill leachate or other industrial liquid waste.

Preferably, the method of the invention further comprises the step of dosing, in the solution to be treated, powdered activated carbon after the coagulant reagents and before the flocculant reagents.

The addition of powdered activated carbon allows to increase the amount of the contaminants removed from the solution to be treated by clari-flocculation.

Preferably, the step of dosing coagulatant and flocculant reagents and/or the step of dosing powdered activated carbon, comprise the step of dosing one or more of the following combinations, in the indicated sequence:
*a.* Ferric chloride (FeCl₃) in solution and polyelectrolyte in solution;
*b.* Aluminium poly-chloride in solution and polyelectrolyte in solution;
c. Ferric chloride (FeCl₃) in solution, powdered activated carbon and polyelectrolyte in solution;
*d.* Aluminium poly-chloride in solution, powdered activated carbon and polyelectrolyte in solution;
*e.* Ferric chloride (FeCl₃) in solution, sodium hydroxide (NaOH), powdered activated carbon in solution and polyelectrolyte in solution;
*f*. Aluminium poly-chloride in solution, sodium hydroxide (NaOH), powdered activated carbon in solution and polyelectrolyte in solution;
*g.* Ferric chloride (FeCl₃) in solution, limewater (Ca(OH)₂), powdered activated carbon and polyelectrolyte in solution;
*h.* Aluminium poly-chloride in solution, limewater (Ca(OH)₂), powdered activated carbon and polyelectrolyte in solution.

These combinations of additives, each with its own sequence, were selected by the Applicant in the course of their studies because they proved to be particularly efficient for the chemical-physical pre-treatment.

Preferably, the step of filtering the solution to be treated by means of the granular activated carbon filter precedes the step of filtering the solution to be treated by means of the selective resin filter.

This filtration order preserves the selective resin filter and ensures, on the whole, a longer operating life.

Preferably the step of dosing the coagulant reagents comprises a dosage comprised between 3,000 mg/l and 5,000 mg/l. Preferably the step of dosing the flocculant reagents comprises a dosage comprised between 10 mg/l and 50 mg/l.

These dosages were selected by the Applicant in the course of their studies because they proved to be particularly effective.

Further features and purposes of the present invention will become more evident from the description below.

### BRIEF DESCRIPTION OF THE DRAWINGS

The invention will be described hereinbelow with reference to some examples, provided for illustrative and non-limiting purposes, and illustrated in the appended drawings. These drawings illustrate different aspects and embodiments of the present invention and, where appropriate, similar structures, components, materials and/or elements in different figures are indicated by similar reference numerals. Moreover, for clarity of illustration, some references may not be repeated in all drawings.
Figure 1 represents a block diagram of a plant for removing PFAS from highly contaminated water, in accordance with a first embodiment of the invention;
Figure 2 represents a block diagram of a plant for removing PFAS from highly contaminated water, in accordance with a second embodiment of the invention; and
Figure 3 represents a block diagram of a plant for removing PFAS from highly contaminated water, in accordance with a third embodiment of the invention.

### DETAILED DESCRIPTION OF THE INVENTION

While the invention is susceptible to various modifications and alternative constructions, some preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The description addresses in detail the peculiar technical aspects and features of the invention, while the known aspects and technical features per se can only be mentioned. In these respects, what is stated above with reference to the prior art remains valid.

The use of "for example", "etc.", "or" indicates non-exclusive alternatives without limitation, unless otherwise indicated. The use of "comprises" and "includes" means "comprises or includes, but not limited to", unless otherwise indicated.

The plant of the invention is intended to be used in the presence of acceleration due to gravity *g*. In the following discussion, it is understood that the acceleration due to gravity unambiguously defines the vertical direction and the horizontal directions perpendicular to it.

Furthermore, still with reference to the acceleration due to gravity, the terms "above", "high", "upper" and the like are defined unambiguously with respect to the terms "below", "low", "lower" and the like.

In the following discussion, continuous reference is made to the flow of the solution to be treated, whose path is followed while describing the features and operation of the plant. Although always the same expression is used, the actual composition of the solution to be treated varies constantly throughout the plant, as various fractions of contaminants are gradually removed from the flow. At the beginning of the plant, the solution to be treated can be for example a landfill leachate or an industrial liquid waste and contains a high amount of pollutants, including PFAS. In addition, the direction of this flow unambiguously identifies the expressions "upstream", "before" and the like, as opposed to the expressions "downstream", "after" and the like.

In accordance with a first aspect, the invention concerns a plant 10 for removing PFAS from a highly contaminated solution 12 comprising landfill leachates or industrial liquid waste. The plant 10 of the invention comprises:
- a reactor 14 configured for submitting the highly contaminated solution 12 to a chemical-physical pre-treatment of a batch type, wherein the reactor 14 comprises means 16 for dosing additives, configured for dosing coagulant reagents 32 and, subsequently, flocculant reagents 34; and wherein the reactor 14 is configured so as to separate the sludges which originate inside it from the solution 12 to be treated;
- an intermediate reservoir 18 for accumulating the solution 12 downstream of the reactor 14, configured for receiving the entire quantity of solution 12 at the end of the chemical-physical treatment operated by the reactor 14 and configured for releasing a controlled flow rate of solution 12 downstream; and
- a series 20 of filters, placed downstream of the intermediate reservoir 18, configured for submitting the solution 12 to continuous filtration;
wherein the series 20 of filters comprises
- a glass filter 22 containing glass microbeads with different particle sizes arranged to form homogeneous layers;
- a granular activated carbon filter 24, placed downstream of the glass filter 22; and
- a selective resin filter 26, placed downstream of the glass filter 22, comprising resins containing electropositive functional groups.

The invention refers to a plant 10 configured for performing a treatment for removing per- and poly-fluoroalkyl substances (PFAS) present in highly contaminated liquid solutions 12. Within the scope of this discussion, this expression refers to liquid solutions 12 having:
- concentrations of PFAS greater than 10,000 ng/l; and/or
- an organic charge, expressed as chemical oxygen demand (COD) greater than 1,000 mgO₂/l; and/or
- a concentration of suspended material greater than 200 mg/l.

Similar solutions 12 may be, for example, landfill leachates and other industrial liquid waste.

As the skilled person can well understand, the plant 10 also comprises hydraulic connections, both with the outside (in input and in output) and between the different elements that compose it. In particular, the hydraulic connections may comprise pipes 28 that connect the outlet of a given element of the plant 10 with the inlet of one or more of the elements that are downstream.

As already mentioned, the reactor 14 of the plant 10 comprises means 16 for dosing additives. Such additives may comprise, depending on the specific needs, coagulant reagents 32 and flocculant reagents 34, intended to obtain overall clari-flocculation, and possibly powdered activated carbon 36, also called PAC (*Powdered Activated Carbon*)*.* In this case, the clari-flocculation is combined with the action of the powdered activated carbon, thus obtaining the adhesion of the pollutants to the pores of the activated carbon as a result of adsorption. In this way, a significant fraction of the organic charge (expressed as COD) and of the other suspended substances is pre-treated and then removed.

The means 16 for dosing additives are configured for dosing in the reactor 14 in a first step the coagulant reagents 32 and, in a subsequent step, the flocculant reagents 34. In accordance with some embodiments, the means 16 for dosing additives are configured for dosing also powdered activated carbon 36 in the reactor 14 at an intermediate step, after the coagulant reagents 32 and before the flocculant reagents 34.

In accordance with some embodiments, the means 16 for dosing additives are configured for dosing in the reactor 14 also a pH correcting reagent at an intermediate step, after the coagulant reagents 32 and before the powdered activated carbon 36 (if employed) and before the flocculant reagents 34.

The pre-treatment in the reactor 14 allows to reduce the residual concentration of the pollutants in the flow of the solution 12 within levels such as to allow an optimal operation of the series 20 of filters arranged downstream of the reactor 14, in particular it allows an optimal adsorption in the granular activated carbon filter 24 and an optimal ion exchange in the selective resin filter 26.

The choice of the optimal parameters for the clari-flocculation process, such as the type and amount of reagents to be dosed, strongly depends on the characteristics of the solution 12 to be treated.

The coagulant reagents 32 may for example be ferric chloride (FeCl₃) in solution or aluminium poly-chloride (Al (OH)ₓ Cl_{y} with x+y=3) in solution. The dosage of coagulant reagents 32 is preferably comprised between 3,000 mg/l and 5,000 mg/l.

After the addition of the coagulant reagents 32, the solution 12 should preferably have a pH comprised in the range from 4 to 6. In the event that the pH of the solution 12 is lower than 4, this range is reached by dosing an appropriate amount of pH-correcting reagents, always downstream of the coagulant dosage. Preferably the pH-correcting reagents may be sodium hydroxide (NaOH) or calcium hydroxide (Ca(OH)₂) for example in the form of limewater.

The powdered activated carbon 36 can be dosed in solid form or in aqueous suspension. Preferably, the powdered activated carbon 36 has a surface area comprised between 1,000 and 1,800 m²/g. The dosage of the powdered activated carbon 36, which is carried out downstream of the dosage of the coagulant reagent 32, is preferably comprised in the range 1,000-3,000 mg/l.

The flocculant reagents 34 may comprise for example a polyelectrolyte, or polyanionic or polycationic polymer, i.e. a polymer functionalized with various cationic and/or anionic groups. The dosage of the flocculant reagent 34 is preferably comprised in the range 10-50 mg/l. Preferably the flocculant reagent 34 is dosed in 0.1% solution.

In the course of the studies conducted by the Applicant, the following combinations of additives were shown to be effective:
*a.* Ferric chloride (FeCl₃) in solution and polyelectrolyte in solution;
*b.* Aluminium poly-chloride in solution and polyelectrolyte in solution;
*c*. Ferric chloride (FeCl₃) in solution, powdered activated carbon and polyelectrolyte in solution;
*d.* Aluminium poly-chloride in solution, powdered activated carbon and polyelectrolyte in solution;
*e.* Ferric chloride (FeCl₃) in solution, sodium hydroxide (NaOH) in solution, powdered activated carbon and polyelectrolyte in solution;
*f*. Aluminium poly-chloride in solution, sodium hydroxide (NaOH) in solution, powdered activated carbon and polyelectrolyte in solution;
*g.* Ferric chloride (FeCl₃) in solution, limewater (Ca(OH)₂), powdered activated carbon and polyelectrolyte in solution;
*h.* Aluminium poly-chloride in solution, limewater (Ca(OH)₂), powdered activated carbon and polyelectrolyte in solution.

Combinations that include the dosage of ferric chloride (indicated above at points *a., c., e.,* and *g*.) have proved to be particularly effective, in order to remove the suspended material and a substantial fraction of the organic charge (70-90%).

In addition, the combinations that include the dosage of powdered activated carbon (indicated above at points *c*. to *h*.) have proved to be particularly effective.

Preferably the means 16 for dosing additives are configured to dispense the additives in specific combinations between them and according to specific sequences, in particular according to one of the combinations and of the sequences reported above from *a.* to *h.* For example, using the sequence *c*., ferric chloride (FeCl₃) in solution, then powdered activated carbon and finally a polyelectrolyte in solution are dispensed in succession. The sequences of the additives reported above allow to optimize the performance of the filters 22, 24, 26 arranged downstream of the reactor 14, in particular they allow to extend the operating life thereof.

The Applicant has found that the sequential dosing of coagulant reagents 32, powdered activated carbon 36 and flocculant reagents 34 (as, for example, in the combinations described above at points from *c*. to *h*.) allows to obtain the considerable advantage of removing, in addition to the organic charge, also a part of the PFAS, especially the fraction of the long-chain compounds. As the skilled person can well understand, the significant reduction of the organic pollutants and long-chain PFAS operated upstream of the filtration, allows to maximize the capacity of the filters (in particular of the selective resin filter 26) to remove short-chain PFAS (PFBAs in particular).

The reactor 14 is configured so as to separate the sludges which originate inside it from the solution 12 to be treated. By way of example, in a manner known per se, the reactor 14 may comprise a sludge separator of the type: lamella clarifier, flocculator or dissolved air floatation apparatus. In addition or alternatively, the reactor 14 may itself be designed with a shape that allows proper sedimentation of the sludges (truncated cone).

The sludges, which are generated in particular during the pre-treatment of clari-flocculation described above, are discharged from a special pipeline and are led to an adequate disposal, known in itself. Differently, the solution 12 to be treated is fed to the series 20 of filters that is placed downstream of the reactor 14.

The clarified waters exiting the reactor 14 are conveyed to the intermediate accumulation reservoir 18 which allows cooperation between the reactor 14 of the batch type and the series 20 of filters which operate in a continuous manner. In a manner known per se, the intermediate reservoir 18 is sized to receive in input the entire quantity of solution 12 at the end of the chemical-physical treatment operated by the upstream reactor 14 of the batch type, and is configured for releasing a controlled flow rate of solution 12 towards the series 20 of downstream filters which operate in a continuous manner.

As mentioned above, downstream of the intermediate reservoir 18 the series 20 of filters is provided, each of which filter is configured for submitting the solution 12 to a continuous filtration process. Preferably the filters 22, 24, 26 of the plant 10 have a columnar structure, in itself widely known, in which the inlet for the solution 12 to be treated is placed in the upper part of the column, and the filtration process takes place from top to bottom, under pressure. At the bottom of the filter there is a collector tube from which the filtered solution 12 is redirected and sent to the subsequent filter or to discharge. The configuration of the series 20 of the filters may vary depending on the embodiments of the plant 10, some of which are described below with reference to the attached figures.

Preferably the first filter of the series 20 is a glass filter 22. In this case, the plant 10 comprises a pipe 28 that connects the outlet of the reactor 14 to the inlet of the glass filter 22. The glass filter 22 contains glass beads with different particle sizes, wherein the microbeads of different particle sizes are arranged to form as many homogeneous layers inside them.

In accordance with a possible embodiment of the invention, microbeads with dimensions comprised between 0.20 and 0.30 mm are used in the upper part of the glass filter 22, microbeads with dimensions comprised between 0.75 and 1.00 mm are used in the central part of the glass filter 22 and glass microbeads with dimensions comprised between 1.00 and 1.30 mm are inserted in the lower part of the glass filter 22. In accordance with this configuration of the glass filter 22, the solution 12 first encounters the layer of microbeads with finer particle size and then the layers with gradually coarser particle size. This arrangement, counterintuitive for a person skilled in the art, allows to optimize the performance of the glass filter 22 both in the filtration step and in the regeneration step by counter-current washing. This expedient allows the operation of the glass filter 22 to be extended even up to 10 years, with a considerable advantage in terms of the operating costs of the plant 10.

The glass filter 22, thanks to the particle sizes of the microbeads used, allows the removal of a significant fraction of suspended solids and/ or colloidal substances, even very fine ones; these pollutants are not normally retained by the sand filters due to the coarser particle size of quartz sand. The removal of these substances by the glass filter 22 is extremely advantageous, as they would quickly clog the filters placed downstream (GAC filter 24 and selective resins filter 26), deactivating them in too short a time to ensure the economic viability of the plant 10.

In addition, the glass filter 22 also allows the removal of the fraction of heavy metals, such as iron and aluminium, still present downstream of the clari-flocculation process. Such metals may be present from the start in the solution 12 to be treated, but in any case they are added to the solution 12 in the reactor 14 during the pre-treatment of clari-flocculation. The removal of the metals by the glass filter 22 is extremely advantageous, since on the one hand the concentrations of metals at the discharge are regulated by law and, on the other hand, the metals cannot be effectively removed either by the granular activated carbon filter 24 or by the selective resin filter 26.

The ability of the glass filter 22 to remove heavy metals from the solution 12 allows the filters placed downstream (GAC filter 24 and selective resins filter 26) to be fed with a solution 12 totally free of contaminants that could adversely interfere with the adsorption and ion exchange processes. In this way, the overall performance of the plant 10 is greatly improved and the need for backwashing the filters is minimized. As the skilled person can well understand, the wastewater from filter backwashing must be reprocessed within the plant 10 itself, decreasing the efficiency thereof, or must be disposed of at authorized third-party plants, increasing operating costs.

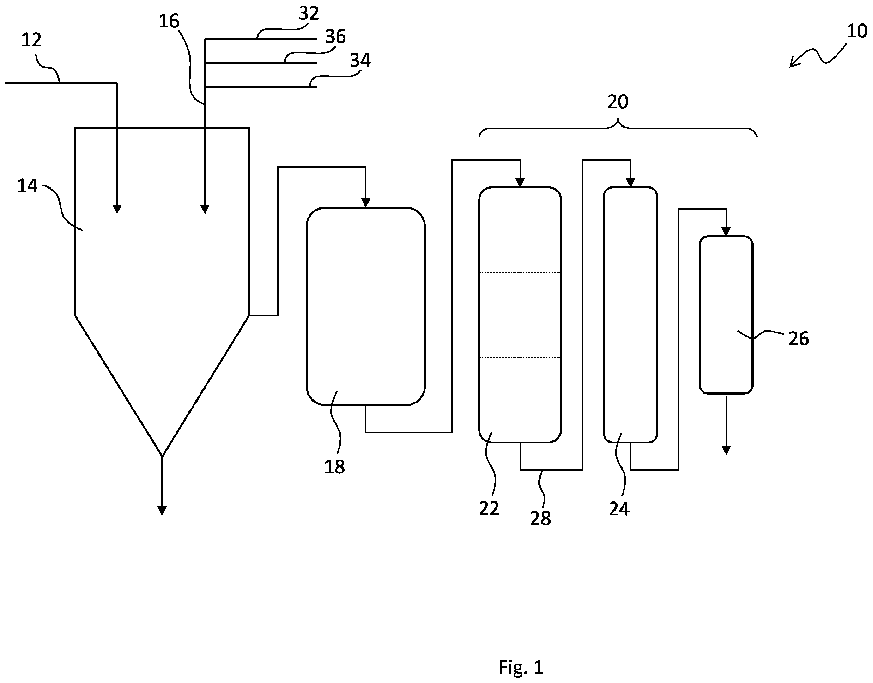

In accordance with some embodiments of the plant 10 (such as, for example, that of Figure 1), the granular activated carbon filter 24, also referred in brief as the GAC filter *24 (Granular Activated Carbon),* is placed downstream of the glass filter 22. In this case, the plant 10 comprises a pipe 28 that connects the outlet of the glass filter 22 to the inlet of the GAC filter 24.

The GAC filter 24 is configured for an effective removal of the residual organic charge (expressed as COD) still present downstream of the reactor 14, thus after the chemical-physical pre-treatment of clari-flocculation. The GAC filter 24 also allows for removing a significant fraction of the PFAS, predominantly the long-chain ones. Preferably, the granular activated carbon used has a specific surface area comprised between 800 and 1,550 m²/g. Preferably, the granular activated carbon used has an iodine value comprised between 800 and 1,300.

As the skilled person can well understand, when the GAC filter 24 is new, its effectiveness in removing pollutants is maximum. Subsequently, as the process progresses, the granular activated carbon proceeds to saturate due to the adsorption of organic pollutants and PFAS, and consequently the solution 12 exiting the GAC filter 24 becomes increasingly rich in these substances.

As the skilled person can well understand, for the GAC filter 24 the need arises to periodically replace the filtering masses of granular activated carbon once they are exhausted. Both the adsorption of the organic pollutants and the adsorption of the PFAS contribute to their depletion. In the prior art solutions, for the GAC filters, saturation due to the PFAS occurs earlier than that due to the organic pollutants. The configuration of the plant 10 of the present invention allows to considerably extend the operating period of the GAC filter 24, since the filter itself is mainly used to remove the organic charge from the solution 12, without worrying at this stage about the concentration of PFAS exiting from the GAC filter 24; in the plant 10 of the invention, in fact, the PFAS can be removed from the solution 12 also in the subsequent selective resin filter 26.

In accordance with some embodiments of the plant 10 (such as that of Figure 1), the selective resin filter 26 is placed downstream of the GAC filter 24. In this case, the plant 10 comprises a pipe 28 that connects the outlet of the GAC filter 24 to the inlet of the selective resin filter 26.

The selective resin filter 26 is filled with resins containing electropositive functional groups that allow complete removal of the PFAS. The selective resins are generally constituted by polymeric material preferably selected from the group comprising resins constituted by polystyrene-divinylbenzene or by polyacrylic resins. The electropositive functional groups are preferably amino/amide groups. The use of polystyrene-divinylbenzene-based resins, functionalized with amino groups, has proved to be particularly convenient.

Prior to saturation of the GAC filter 24 placed upstream, the selective resin filter 26 mainly receives a solution 12 that is poorly contaminated with organic pollutants, but also containing high concentrations of PFAS. This configuration benefits from the use of the selective resins, which are known to have a PFAS removal capacity per unit much greater than that of the activated carbons, thus allowing the plant 10 as a whole to maintain the required level of purification for much longer times than would be the case in plants using only activated carbons or only selective resins. The low presence of interfering contaminants (mainly of an organic nature), removed beforehand upstream, by the reactor 14 first and then by the GAC filter 24, allows a more sustainable use of the selective resins in terms of operating costs. In fact, in accordance with the invention, selective resins can only be replaced when saturation is reached for PFAS.

Since the GAC filter 24 completely removes the organic charge, the selective resin filter 26 receives in input a solution 12 to be treated that is comparable to low-contaminated groundwater, containing only PFAS. In other words, the overall structure of the plant 10 of the invention allows the selective resins to work mainly on the removal of PFAS. Consequently, the plant 10 in accordance with the invention consists in the fact that it employs a smaller amount of selective resins than other plants of a known type comparable thereto. This represents a considerable advantage, because selective resins are much more expensive than granular activated carbon. In addition, the selective resins, once exhausted, must be disposed of at third-party plants that provide for destruction by incineration. The use of a low amount of selective resins and the increase in the removal capacity of the PFAS obtainable through the present invention entail a reduction in the operating costs but above all a positive impact in environmental terms.

Downstream of the series 20 of filters described above, a discharge is provided. Through this discharge the purified solution 12 (which can now be called water) can be released into a receiving water body or, in some cases, can be sent to any subsequent treatment sections.

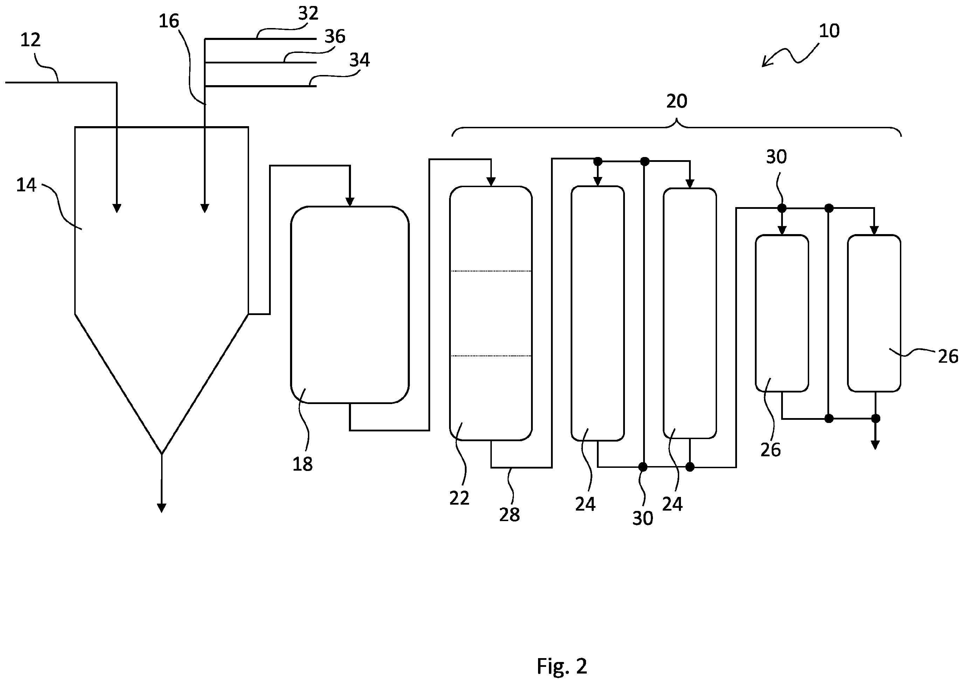

An embodiment of the plant 10 that is particularly advantageous is depicted in Figure 2. In this embodiment, two GAC filters 24 are arranged downstream of the glass filter 22. In this case, the plant 10 comprises pipes 28 that connect the outlet of the glass filter 22 to the inlets of two GAC filters 24 and the outlets of the two GAC filters 24 to the inlet of at least one selective resin filter 26. The connection of the filters constituted by the pipes 28 is configured so as to allow different modes of operation: in series, in parallel or alternated. In some embodiments, the connection constituted by the pipes 28 is reconfigurable, for example by means of special three-way valves 30.

In one mode the two GAC filters 24 may be connected in series. In other words, the solution 12 to be treated exiting the glass filter 22 is fed to the first GAC filter 24 and, exiting therefrom, to the second GAC filter 24; in this way the length of the filtration path to which the solution 12 to be treated is submitted is increased. In a different mode the two GAC filters 24 can be connected in parallel. In other words, the solution 12 to be treated exiting the glass filter 22 is fed simultaneously to the first and second GAC filters 24; in this way the flow rate of solution 12 to be treated passing through each of the two filters is halved.

This connection scheme, however, in addition to the possibility of operating the two filters in series or in parallel, allows a further alternated mode of operation, which is particularly advantageous. In accordance with this mode, in the normal operation of the plant 10, only one GAC filter 24 is used, exactly as occurring in the plant 10 of Figure 1. When the filter in use (for example the first GAC filter 24) reaches saturation, it is possible to reconfigure the connection in such a way that the solution 12 to be treated exiting the glass filter 22 is fed directly to the other filter (in the example, the second GAC filter 24), by-passing the previous one. In this way it is possible to proceed with replacing the filtering masses of the first filter without any need to stop the plant 10. Similarly, when the second filter also reaches saturation, it is possible to reconfigure the connection in such a way that the solution 12 to be treated exiting the glass filter 22 is fed again to the first filter. In this way it is possible to proceed with replacing the filtering masses of the second filter without any need to stop the plant 10.

In the plant 10 of Figure 2, two selective resin filters 26 are arranged downstream of the GAC filters 24. In this case the plant 10 comprises pipes 28 connecting the outlets of the two GAC filters 24 to the inlets of the two selective resin filters 26 and the outlets of the two selective resin filters 26 to the discharge. Similarly to what is described above, also in this case the connection of the filters constituted by the pipes 28 is reconfigurable and allows different modes of operation: in series, in parallel or alternated. In other words, the two selective resin filters 26 can be connected in series, thereby increasing the length of the filtration path to which the solution 12 to be treated is submitted. The two selective resin filters 26 can be connected in parallel, thus halving the flow rate of solution 12 to be treated that passes through each one of the two filters. Finally, the two selective resin filters 26 can be connected in an alternated manner, thus allowing the replacement of an exhausted filter without any need to stop the plant 10.

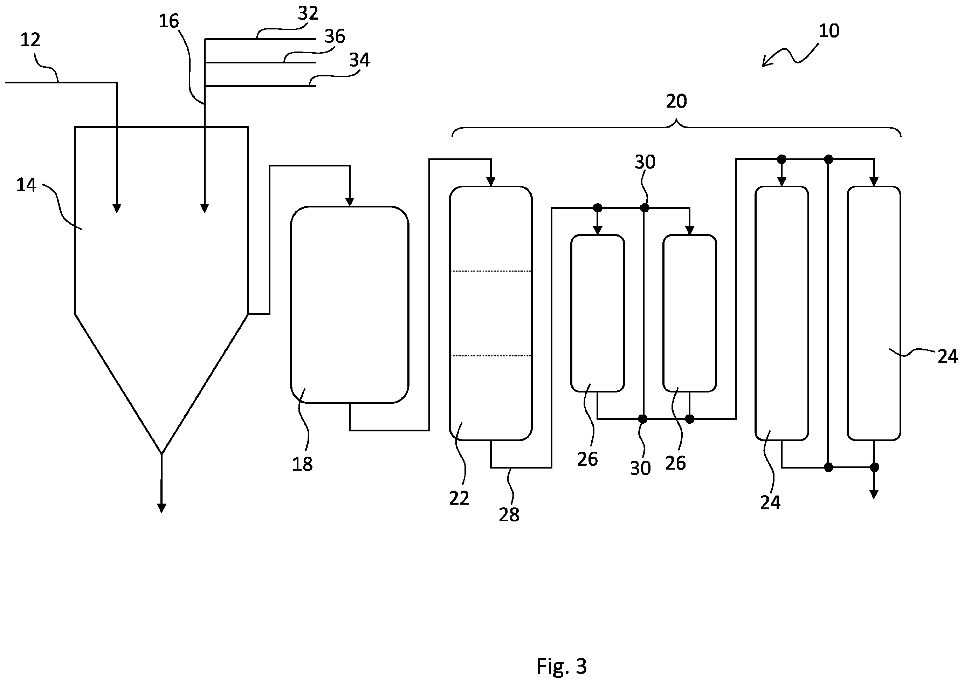

In accordance with some embodiments of the invention, the selective resin filter 26 is placed upstream of the GAC filter 24. In particular, in the embodiment of Figure 3, two selective resin filters 26 are placed upstream of two GAC filters 24. As the skilled person can well understand, the operation of the individual filters is completely similar to what is described above, whereas their combination along the series is different. Furthermore, in the embodiment of Figure 3, the connection between the filters is similar to that described above in relation to Figure 2; in particular, the connection of the filters constituted by the pipes 28 is reconfigurable and allows different modes of operation: in series, in parallel or alternated, both for the selective resin filters 26 and for the GAC filters 24.

The synergy between clari-flocculation and sequential filtration on glass, GAC and selective resins guarantees the complete removal of PFAS, including those that are difficult to remove with the aforementioned individual technologies (PFBA), present in highly contaminated solutions 12 such as landfill leachates and industrial liquid waste, achieving compliance with the stringent limits imposed by the regulatory bodies.

In accordance with a second aspect, the invention concerns a method for removing PFAS from a highly contaminated solution 12 comprising landfill leachates or industrial liquid waste, wherein the solution 12 comprises:
- concentrations of PFAS greater than 10,000 ng/l; and/or
- an organic charge, expressed as chemical oxygen demand (COD) greater than 1,000 mgO₂/l; and/or
- a concentration of suspended material greater than 200 mg/l.

The method of the invention comprises the steps of:
- providing a reactor 14 configured to allow a chemical-physical pre-treatment of the batch type;
- feeding the solution 12 to be treated to the reactor 14;
- dosing, in the solution 12 to be treated, coagulant reagents 32 and, subsequently, flocculant reagents 34;
- promoting a clari-flocculation process in the solution 12 to be treated;
- separating the sludges generated by the clari-flocculation from the solution 12 to be treated;
- accumulating the solution 12 in an intermediate reservoir 18;
- releasing in a continuous manner a controlled flow rate of solution 12 from the intermediate reservoir 18;
- filtering in a continuous manner the solution 12 to be treated by means of a glass filter 22 containing glass microbeads with different particle sizes arranged to form homogeneous layers;
and, after the step of filtering the solution 12 by means of the glass filter 22,
- filtering in a continuous manner the solution 12 to be treated by means of a granular activated carbon filter 24; and
- filtering in a continuous manner the solution 12 to be treated by means of a selective resin filter 26.

Within the scope of the invention, the highly contaminated solution 12 comprises:
- concentrations of PFAS greater than 10,000 ng/l; and/or
- an organic charge, expressed as chemical oxygen demand (COD) greater than 1,000 mgO₂/l; and/or
- a concentration of suspended material greater than 200 mg/l.

Preferably the method further comprises the step of dosing, in the solution 12 to be treated, powdered activated carbon 36 after the coagulant reagents 32 and before the flocculant reagents 34.

Preferably the method further comprises the step of dosing, in the solution 12 to be treated, a pH-correcting reagent after the coagulant reagents 32 and before the flocculant reagents 34.

Preferably, in the step of dosing the reagents, one of the following combinations is dosed:
*a.* Ferric chloride (FeCl₃) in solution and polyelectrolyte in solution;
*b.* Aluminium poly-chloride in solution and polyelectrolyte in solution;
c. Ferric chloride (FeCl₃) in solution, powdered activated carbon and polyelectrolyte in solution;
*d.* Aluminium poly-chloride in solution, powdered activated carbon and polyelectrolyte in solution;
*e.* Ferric chloride (FeCl₃) in solution, sodium hydroxide (NaOH), powdered activated carbon in solution and polyelectrolyte in solution;
*f*. Aluminium poly-chloride in solution, sodium hydroxide (NaOH), powdered activated carbon in solution and polyelectrolyte in solution;
*g.* Ferric chloride (FeCl₃) in solution, limewater (Ca(OH)₂), powdered activated carbon and polyelectrolyte in solution;
*h.* Aluminium poly-chloride in solution, limewater (Ca(OH)₂), powdered activated carbon and polyelectrolyte in solution.

Preferably, the delivery of the additives (i.e. the coagulant and flocculant reagents and possibly the powdered activated carbon and/or the pH corrector) takes place according to a specific sequence, in particular according to one of the sequences shown above at points from *a.* to *h.*

In accordance with some embodiments of the method, the step of filtering the solution 12 to be treated by means of the GAC filter 24 precedes the step of filtering the solution 12 to be treated by means of the selective resin filter 26.

In accordance with other embodiments of the method, the step of filtering the solution 12 to be treated by means of the GAC filter 24 follows the step of filtering the solution 12 to be treated by means of the selective resin filter 26.

Many other characteristics of the method of the invention can be deduced by the skilled person from the description of the plant 10 given above, in particular where its operation is described. Similarly, other characteristics of the plant 10 of the invention can be deduced by the skilled person from the description of the method provided above.

As the skilled person can well understand from the description above, the plant and the method of the invention allow to effectively remove all PFAS, in particular those that can most hardly be removed with technologies of known type, i.e. short-chain ones. This result is achieved in particular thanks to the synergy between clari-flocculation, operated upstream, and GAC and selective resin filtration, operated downstream. Clari-flocculation in fact allows to obtain, upstream, an almost complete removal of the organic pollutants and long-chain PFAS, which can soon saturate the filters. If the filters are saturated, they fail to effectively intercept the short-chain PFAS, whose hydrophobic interactions are weaker. The invention thus allows to maximize the capacity of the filters (in particular of the GAC filter 24 and of the selective resin filter 26) and thus to effectively remove also short-chain PFAS (PFBAs in particular).

In light of the above, the skilled person may well understand how the invention overcomes the drawbacks highlighted with respect to the prior art.

In particular, the present invention makes available a plant 10 and a method for removing PFAS from highly contaminated waters, which are both effective and efficient.

Furthermore, the present invention makes available a plant 10 and a method for removing PFAS from highly contaminated waters, which allow to minimize the operating costs, in particular those deriving from the replacement of the filtering masses.

Lastly, the present invention makes available a plant 10 and a method for removing PFAS from highly contaminated waters, which allow to remove at the same time the other pollutants present in the same waters, in particular the heavy metals.

In conclusion, all the details can be replaced by other technically equivalent elements; the features described in relation to a specific embodiment can also be used in the other embodiments; the materials used, as well as the contingent shapes and dimensions, can be any according to the specific implementation needs without leaving the scope of protection of the following claims.

## Claims

1. Plant (10) for removing PFAS from a highly contaminated solution (12) comprising landfill leachates or industrial liquid waste, comprising:
- a reactor (14) configured for submitting the highly contaminated solution (12) to a chemical-physical pre-treatment of the batch type, wherein the reactor (14) comprises means (16) for dosing additives configured for dosing coagulant reagents (32) and, subsequently, flocculant reagents (34); and wherein the reactor (14) is configured so as to separate the sludges which originate inside it from the solution (12) to be treated;
- an intermediate reservoir (18) for accumulating the solution (12) downstream of the reactor (14), configured for receiving the entire quantity of solution (12) at the end of the chemical-physical treatment operated by the reactor (14) and configured for releasing a controlled flow rate of solution (12) downstream; and
- a series (20) of filters, placed downstream of the intermediate reservoir (18), configured for submitting the solution (12) to a continuous filtration;
wherein the series (20) of filters comprises:
- a glass filter (22) containing glass microbeads with different particle sizes arranged to form homogeneous layers;
- a granular activated carbon filter (24), placed downstream of the glass filter (22); and
- a selective resin filter (26), placed downstream of the glass filter (22), comprising resins containing electropositive functional groups.

2. Plant (10) according to claim 1, wherein the means (16) for dosing additives are configured for dosing powdered activated carbon (36) after dosing the coagulant reagents (32) and before dosing the flocculant reagents (34).

3. Plant (10) according to claim 1 or 2, wherein the reactor (14) has a truncated conical shape and/or comprises a sludge separator of the type: lamella clarifier, flocculator or dissolved air floatation apparatus.

4. Plant (10) according to one or more of the preceding claims, wherein microbeads with dimensions comprised between 0.20 and 0.30 mm are provided in the upper part of the glass filter (22); microbeads with dimensions comprised between 0.75 and 1.00 mm are provided in the central part of the glass filter (22); and glass microbeads with dimensions comprised between 1.00 and 1.30 mm are provided in the lower part of the glass filter (22).

5. Plant (10) according to one or more of the preceding claims, wherein the granular activated carbon used in the filter (24) has a specific surface area comprised between 800 and 1,550 m²/g and an iodine value comprised between 800 and 1,300.

6. Plant according to one or more of the preceding claims, wherein the selective resins used in the filter are constituted by resins constituted by polystyrene-divinylbenzene or by polyacrylic resins, and wherein the electropositive functional groups are amine/ amide groups.

7. Plant (10) according to one or more of the preceding claims, comprising two granular activated carbon filters (24) and wherein the connection of the two granular activated carbon filters (24) is reconfigurable and allows different modes of operation: in series, in parallel or alternated.

8. Plant (10) according to one or more of the preceding claims, comprising two selective resin filters (26) and wherein the connection of the two selective resin filters (26) is reconfigurable and allows different modes of operation: in series, in parallel or alternated.

9. Plant (10) according to one or more of the preceding claims, wherein the granular activated carbon filter (24) is placed upstream of the selective resin filter (26).

10. Method for removing PFAS from a highly contaminated solution (12) comprising landfill leachates or industrial liquid waste, wherein the solution (12) comprises:
- concentrations of PFAS greater than 10,000 ng/l; and/or
- an organic charge, expressed as chemical oxygen demand (COD) greater than 1,000 mgO₂/l; and/or
- a concentration of suspended material greater than 200 mg/l;
wherein the method further comprises the steps of:
- providing a reactor (14) configured to allow a chemical-physical pre-treatment of the batch type;
- feeding the solution (12) to be treated to the reactor (14);
- dosing, in the solution (12) to be treated, coagulant reagents (32) and, subsequently, flocculant reagents (34);
- promoting a clari-flocculation process in the solution (12) to be treated;
- separating the sludges generated by the clari-flocculation from the solution (12) to be treated;
- accumulating the solution (12) in an intermediate reservoir (18);
- releasing in a continuous manner a controlled flow rate of solution (12) from the intermediate reservoir (18);
- filtering in a continuous manner the solution (12) to be treated by means of a glass filter (22) containing glass microbeads with different particle sizes arranged to form homogeneous layers;
and, after the step of filtering the solution (12) by means of the glass filter (22),
- filtering in a continuous manner the solution (12) to be treated by means of a granular activated carbon filter (24); and
- filtering in a continuous manner the solution (12) to be treated by means of a selective resin filter (26).

11. Method according to the preceding claim, further comprising the step of dosing, in the solution (12) to be treated, powdered activated carbon (36) after the coagulant reagents (32) and before the flocculant reagents (34).

12. Method according to claim 10 or 11, wherein the step of dosing coagulant reagents (32) and flocculant agents (34) and/or the step of dosing powdered activated carbon (36), comprise the step of dosing one or more of the following combinations, in the indicated sequence:
*a.* Ferric chloride (FeCl₃) in solution and polyelectrolyte in solution;
*b.* Aluminium poly-chloride in solution and polyelectrolyte in solution;
c. Ferric chloride (FeCl₃) in solution, powdered activated carbon and polyelectrolyte in solution;
*d.* Aluminium poly-chloride in solution, powdered activated carbon and polyelectrolyte in solution;
*e.* Ferric chloride (FeCl₃) in solution, sodium hydroxide (NaOH), powdered activated carbon in solution and polyelectrolyte in solution;
*f*. Aluminium poly-chloride in solution, sodium hydroxide (NaOH), powdered activated carbon in solution and polyelectrolyte in solution;
*g.* Ferric chloride (FeCl₃) in solution, limewater (Ca(OH)₂), powdered activated carbon and polyelectrolyte in solution;
*h.* Aluminium poly-chloride in solution, limewater (Ca(OH)₂), powdered activated carbon and polyelectrolyte in solution.

13. Method according to one or more of claims 10 to 12, wherein the step of filtering the solution (12) to be treated by means of the granular activated carbon filter (24) precedes the step of filtering the solution (12) to be treated by means of the selective resin filter (26).

14. Method according to one or more of claims 10 to 13, wherein the step of dosing the coagulant reagents (32) comprises a dosage comprised between 3,000 mg/l and 5,000 mg/l.

15. Method according to one or more of claims 10 to 14, wherein the step of dosing the flocculant reagents (34) comprises a dosage comprised between 10 mg/l and 50 mg/l.
